# EUROPEAN PATENT SPECIFICATION

(11) **EP 4 098 884 B1**
(45) Date of publication and mention of the grant of the patent: **14.10.2026**
(21) Application number: 22186643.7
(22) Date of filing: 23.03.2018
(51) Int. Cl.: F04D 29/058, F04D 25/06

(54) **MAGNETIC BEARING MOTOR COMPRESSOR**
MAGNETLAGERMOTORVERDICHTER
COMPRESSEUR DE MOTEUR À PALIER MAGNÉTIQUE

(30) Priority: 24.03.2017 US 201762476343 P; 29.12.2017 US 201762612065 P
(43) Date of publication of application: 07.12.2022
(62) Document number(s) of the earlier application(s) in accordance with Art. 76 EPC: 18716854.7 / 3 601 804
(73) Proprietor: Johnson Controls Tyco IP Holdings LLP, Milwaukee, WI 53209 (US)
(72) Inventor: SNELL, Paul W., York, Pennsylvania, 17402 (US); CASPER, Ian, York, Pennsylvania, 17403 (US); SCHREIBER, Jeb W., Stewartstown, Pennsylvania, 17363 (US); BILMANIS, Daniela, New Carrollton, Maryland, 20784 (US); KANE, Ajit, York, Pennsylvania, 17404 (US)
(74) Representative: Meissner Bolte Nürnberg

(56) References cited:
- EP-A1- 2 677 176
- WO-A1-2013/012491
- WO-A1-2015/160881
- WO-A2-2014/084989
- DE-A1- 102007 060 654
- JP-A- 2004 060 686
- US-A- 5 924 847
- US-A1- 2013 033 148

## Description

### BACKGROUND

The present disclosure relates generally to a high speed semi-hermetically-sealed induction motor that directly drives the centrifugal compressor of a chiller assembly. Some centrifugal compressors utilize medium pressure (MP) refrigerant, magnetic bearings, and a high speed permanent magnet motor. However, high speed permanent magnet motors often require the use of expensive rare-earth materials and a specialized variable speed drive (VSD). Impellers used with medium pressure refrigerants tend to operate at high speeds in order to achieve the required pressure rise. Utilizing low pressure (LP) refrigerant allows for the use of larger diameter impellers and, subsequently, slower operating speeds. The lower operating speed of a LP centrifugal compressor can permit the use of high-speed direct drive induction motors and a simplified VSD. The combination of induction motor technology and simplified VSDs can provide similar performance to permanent magnet motors at a reduced cost.

WO 2014/084989 A2 discloses a prior art motor having two radial magnetic bearing assemblies and a pin extending through the housing of the motor in order to inhibit displacement of the motor stator relative to the housing.

### SUMMARY

One implementation of the present disclosure is a motor for a chiller assembly according to the present invention as defined in claim 1. The induction motor includes a stator, a rotor, and a shaft with a first end and a second end. The rotor and the shaft are configured to rotate relative to the stator. The induction motor further includes a first magnetic bearing assembly located proximate the first end of the shaft and a second magnetic bearing assembly located proximate the second end of the shaft. The first and the second magnetic bearing assemblies are configured to support the shaft and associated loads. The shaft is configured to couple to an impeller of a centrifugal compressor.

In some embodiments, the centrifugal compressor utilizes a low pressure refrigerant having an operating pressure of less than 400 kPa. In other embodiments, the low pressure refrigerant is R1233zd.

The first magnetic bearing assembly and the second magnetic bearing assembly include radial magnetic bearing assemblies configured to support the shaft in a radial direction. The induction motor includes a third magnetic bearing assembly configured to support the shaft in an axial direction. In other embodiments, the first, second, and third magnetic bearing assemblies are active magnetic bearing assemblies.

Another implementation of the present invention is a vapor compression system according to claim 8.

The vapor compression system includes a centrifugal compressor directly driven by the motor of claim 1, a condenser, an expansion device, and an evaporator connected in a closed refrigerant loop.

In some embodiments, the centrifugal compressor is a single-stage compressor with an inlet, an impeller, a diffuser, and a collector or scroll assembly.

In some embodiments, the centrifugal compressor utilizes a low pressure refrigerant having an operating pressure of less than 400 kPa. In other embodiments, the low pressure refrigerant is R1233zd.

The thrust magnetic bearing assembly is located between the first radial magnetic bearing assembly and the second radial magnetic bearing assembly.

Yet another implementation of the present disclosure is an induction motor for a chiller assembly. The induction motor includes a stator having a cylindrical shape, and a rotor coupled to a shaft. The rotor and the shaft are configured to rotate relative to the stator. The induction motor further includes magnetic bearing assemblies configured to support the rotor and a housing configured to at least partially encapsulate the stator, the rotor, the shaft, and the magnetic bearing assemblies. The stator is coupled to the motor housing using a clearance fit. The clearance fit is configured to prevent distortion of the cylindrical shape.

In some embodiments, the shaft is coupled to a centrifugal compressor. The centrifugal compressor includes an inlet, an impeller, a diffuser, and a scroll assembly. In other embodiments, the shaft is configured to drive the impeller via a direct drive connection. In further embodiments, the centrifugal compressor utilizes a low pressure refrigerant having an operating pressure of less than 400 kPa. In still further embodiments, the low pressure refrigerant is R1233zd.

In some embodiments, the first magnetic bearing assembly includes a radial magnetic bearing assembly or a thrust magnetic bearing assembly. In some embodiments, the induction motor includes a second magnetic bearing assembly and a third magnetic bearing assembly. In other embodiments, the first, second, and third magnetic bearing assemblies comprise active magnetic bearing assemblies.

### BRIEF DESCRIPTION OF THE DRAWINGS

FIG. 1 is a perspective view drawing of a chiller assembly, according to some embodiments.
FIG. 2 is a front elevation view drawing of the chiller assembly of FIG. 1, according to some embodiments.
FIG. 3 is a sectional view drawing of the high-speed induction motor and centrifugal compressor of the chiller assembly of FIG. 1, according to some embodiments.

### DETAILED DESCRIPTION

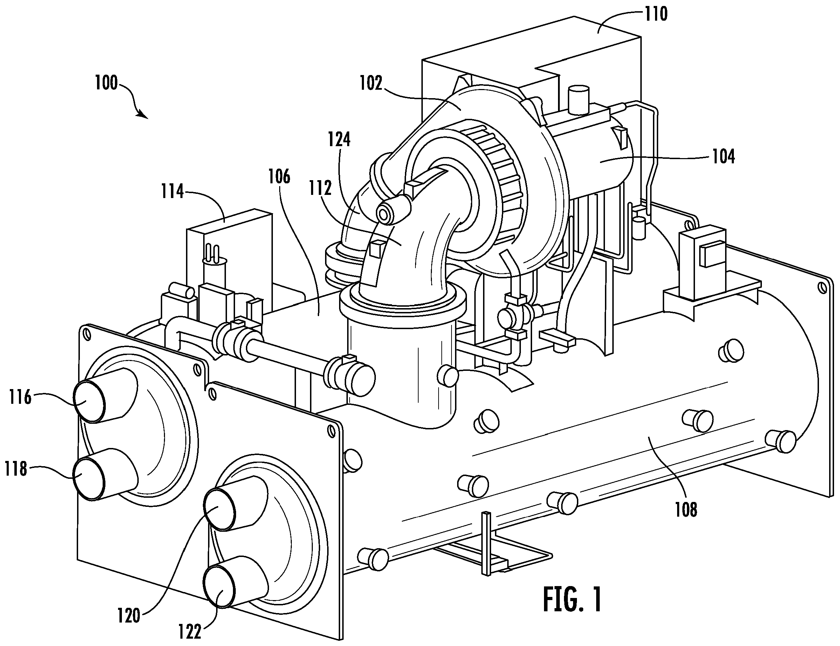

Referring generally to the FIGURES, a chiller assembly having a centrifugal compressor with a magnetic bearing motor compressor is shown. Referring to FIGS. 1-2, an example implementation of a chiller assembly 100 is depicted. Chiller assembly 100 is shown to include a compressor 102 driven by a motor 104, a condenser 106, and an evaporator 108. A refrigerant is circulated through chiller assembly 100 in a vapor compression cycle. Chiller assembly 100 can also include a control panel 114 to control operation of the vapor compression cycle within chiller assembly 100.

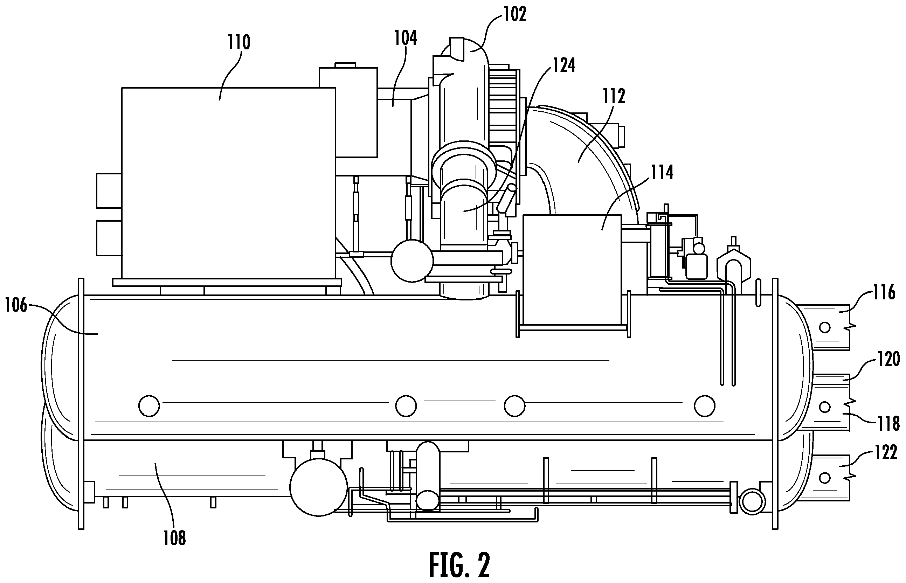

Motor 104 can be powered by a variable speed drive (VSD) 110. VSD 110 receives alternating current (AC) power having a particular fixed line voltage and fixed line frequency from an AC power source (not shown) and provides power having a variable voltage and frequency to motor 104. Motor 104 can be any type of electric motor than can be powered by a VSD 110. For example, motor 104 can be a high speed induction motor. Compressor 102 is driven by motor 104 to compress a refrigerant vapor received from evaporator 108 through suction line 112 and to deliver refrigerant vapor to condenser 106 through a discharge line 124. Compressor 102 can be a centrifugal compressor, a screw compressor, a scroll compressor, or any other type of suitable compressor. In the example described in FIG. 2, compressor 102 is a centrifugal compressor.

Evaporator 108 includes an internal tube bundle (not shown), a supply line 120 and a return line 122 for supplying and removing a process fluid to the internal tube bundle. The supply line 120 and the return line 122 can be in fluid communication with a component within a HVAC system (e.g., an air handler) via conduits that that circulate the process fluid. The process fluid is a chilled liquid for cooling a building and can be, but is not limited to, water, ethylene glycol, calcium chloride brine, sodium chloride brine, or any other suitable liquid. Evaporator 108 is configured to lower the temperature of the process fluid as the process fluid passes through the tube bundle of evaporator 108 and exchanges heat with the refrigerant. Refrigerant vapor is formed in evaporator 108 by the refrigerant liquid delivered to the evaporator 108 exchanging heat with the process fluid and undergoing a phase change to refrigerant vapor.

Refrigerant vapor delivered from evaporator 108 by compressor 102 to condenser 106 transfers heat to a fluid. Refrigerant vapor condenses to refrigerant liquid in condenser 106 as a result of heat transfer with the fluid. The refrigerant liquid from condenser 106 flows through an expansion device and is returned to evaporator 108 to complete the refrigerant cycle of the chiller assembly 100. Condenser 106 includes a supply line 116 and a return line 118 for circulating fluid between the condenser 106 and an external component of the HVAC system (e.g., a cooling tower). Fluid supplied to the condenser 106 via return line 118 exchanges heat with the refrigerant in the condenser 106 and is removed from the condenser 106 via supply line 116 to complete the cycle. The fluid circulating through the condenser 106 can be water or any other suitable liquid.

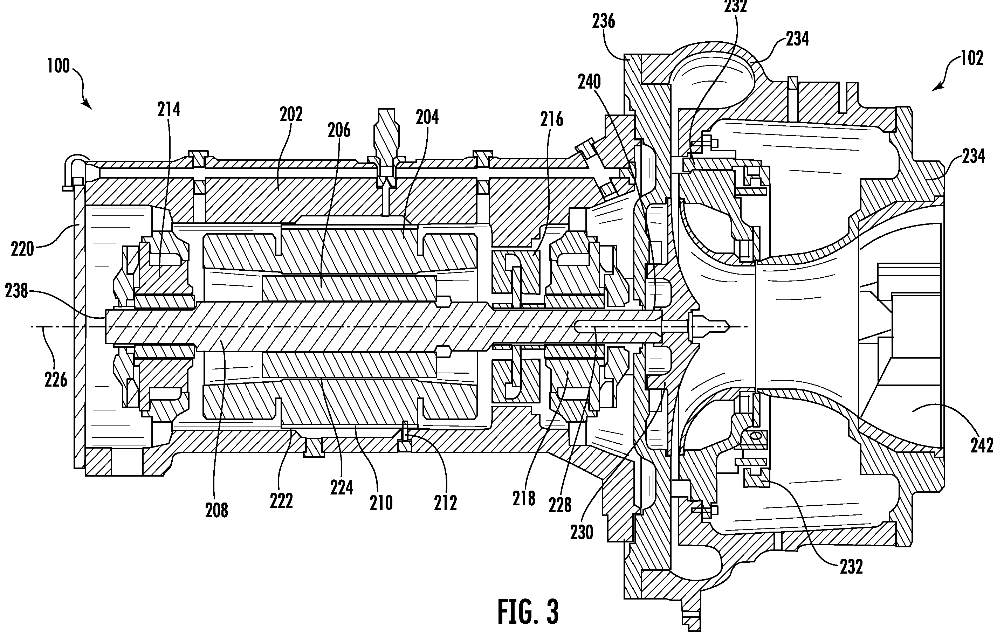

Referring now to FIG. 3, a sectional view of a high speed induction motor utilized to drive a centrifugal compressor is shown. In some embodiments, the high speed induction motor is substantially similar to motor 104, and the centrifugal compressor is substantially similar to compressor 102, both described above with reference to FIG. 1. Motor 104 is shown to include among other components, an enclosure or housing 202, a stator 204, and a rotor 206. The stator 204 is the stationary part of the motor's electromagnetic circuit that imparts radial and axial magnetic forces on the rotor 206. In a properly aligned system, the sum of these forces is zero, or nearly zero. In some embodiments, the stator 204 is partially encapsulated by a motor jacket 210, and both the stator 204 and the motor jacket 210 may have a substantially cylindrical shape. The motor jacket 210 may be constructed from aluminum and may be configured to optimize heat transfer from the stator 204 to prevent overheating of the motor 104.

The rotor 206 is the rotating part of the motor's electromagnetic circuit. In various embodiments, the rotor 206 may be a squirrel-cage rotor, a wound rotor, a salient-pole rotor, or a cylindrical rotor. The rotor 206 is coupled to a shaft 208. The shaft 208 is shown to include a first end 238 and a second end 240. The rotor 206 and the shaft 208 collectively rotate about a central axis 226 in order to transmit torque and rotation to other components and/or assemblies coupled to the motor 104.

As shown in FIG. 3, the second end 240 of the shaft 208 is coupled to an impeller 230 of the centrifugal compressor 102 using a direct drive connection 228. In some embodiments, the direct drive connection 228 may include a mechanical fastener (e.g., a bolt, a pin) used to couple the shaft 208 to the impeller 230. Directly-driven systems provide advantages over gear-driven systems because they decrease friction losses and require fewer, simpler components. In addition to the impeller 230, the centrifugal compressor 102 can include, among other components, an inlet 242, a diffuser assembly comprised of a variable geometry diffuser (VGD) 232 and a diffuser plate 236, and a collector or scroll assembly 234. The inlet 242 can include a pipe that draws fluid (e.g., the LP refrigerant) to the impeller 230, which is a rotating set of vanes that gradually impart kinetic energy to the vapor. Downstream of the impeller 230 is the diffuser gap formed by the VGD 232 and the diffuser plate 236. The kinetic energy of the vapor is converted into pressure energy as it flows and expands through the diffuser gap and before it exits the centrifugal compressor via the collector or scroll assembly 234.

In some embodiments, the LP refrigerant has an operating pressure of less than 400 kPa or approximately 58 psi. In further embodiments, the LP refrigerant is R1233zd. R1233zd is a non-flammable fluorinated gas with low Global Warming Potential (GWP) relative to other refrigerants utilized in commercial chiller assemblies. GWP is a metric developed to allow comparisons of the global warming impacts of different gases, by quantifying how much energy the emissions of 1 ton of a gas will absorb over a given period of time, relative to the emissions of 1 ton of carbon dioxide.

Some induction motors utilize an interference fit to retain the stator within the housing. In an interference fit, the stator can be heated until thermal expansion creates a clearance between the inside diameter of the motor housing and the outside diameter of the stator. In other embodiments, the stator is cooled until the stator contracts and a clearance is created between the motor housing and the stator. Once stator is inserted into the housing and both the housing and the stator reach an equilibrium temperature, the clearance between the housing and the stator diminishes to zero. However, as the thermal expansion rates of the housing and the stator may not be identical, this return to equilibrium temperature can cause distortions in the shape (e.g., the circularity) of the stator. A distorted stator caused by an interference fit can lead to unbalanced magnetic forces on the rotor. When the system is improperly aligned such that the sum of the forces exerted by the stator on the rotor is nonzero, designers must overspecify bearing assemblies (i.e., they must select magnetic bearings with oversized components) in order to not exceed the rotor positioning capabilities of the magnetic bearing assemblies.

Thus, as depicted in FIG. 3, a clearance region 222 is maintained between the motor jacket 210 of the stator 204 and the motor housing 202 to avoid imperfect circularity of the housing 202 from distorting the circularity of the stator. To prevent displacement and/or rotation of the motor jacket 210 and the stator 204 relative to the motor housing 202, a locating pin 212 or key may be inserted through the housing 202 and the motor jacket 210, and retained within the stator 204. In order to minimize unbalanced magnetic forces, it is important for the stator 204 and rotor 206 to be concentric and the air gap 224, depicted in FIG. 3, between the stator and rotor be maintained as a true cylindrical feature. The clearance region 222 between the motor jacket 210 and the motor housing 202 may be controlled such that deviations in the air gap 224 never exceeds 10% of the nominal clearance. Nominal clearance may be defined as perfectly concentric alignment between the stator 204 and the rotor 206 along central axis 226.

The motor 104 is also shown to include magnetic bearing assemblies 214, 216 and 218 that support the rotor 206 and shaft 208 and permit rotation of the rotor 206 and shaft 208 relative to the stator 204. Magnetic bearing assemblies support a load using magnetic levitation, and thus permit relative motion with very low friction and little or no mechanical wear. In some embodiments, magnetic bearing assemblies 214, 216, and 218 are active magnetic bearing (AMB) assemblies. AMB assemblies utilize electromagnetic actuators with continuously adjusted current values to keep the rotor 206 and shaft 208 in a desired position and achieve stable levitation.

The magnetic bearing assemblies 214 and 218 are radial bearing assemblies configured to control the position of the shaft 208 in a radial direction (i.e., perpendicular to central axis 226), while magnetic bearing assembly 216 is a thrust bearing assembly configured to control the position of the shaft 208 in an axial direction (i.e., parallel to central axis 226). The radial magnetic bearing assembly 214 is located proximate the first end 238 of the shaft 208, while radial magnetic bearing assembly 218 is located proximate the second end 240 of the shaft 208. Thrust magnetic bearing assembly 216 is located between radial bearing assemblies 214 and 218, and near the second end 240 of the shaft 208 and the impeller 230. By locating the thrust magnetic bearing assembly 216 near the impeller 230, when heat caused by the operation of the motor 104 causes the shaft 208 to expand, the proximity of the thrust magnetic bearing assembly 216 permits precise alignment of the impeller 230 within the compressor diffuser to achieve an optimized aerodynamic performance.

As described above, motor 104 may be semi-hermetically sealed. A hermetic or semi-hermetically sealed motor 104 may refer to a motor that is exposed to the environment inside the compressor assembly 102 (i.e., such that the motor may be cooled by the refrigerant circulating through the chiller assembly). By contrast, a motor that is not designed to be hermetic or semi-hermetic may be enclosed in a separate housing, and connected to a compressor via a shaft coupling and shaft seal. Motor 104 may be considered semi-hermetically sealed as end plate 220 may be detachably fastened to the housing 202 through the use of mechanical fasteners and seals (e.g., bolts, o-rings). In comparison, a fully hermetically sealed compressor is one which encapsulates the motor and may include a welded enclosure.

The construction and arrangement of the systems and methods as shown in the various exemplary embodiments are illustrative only. Although only example embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, such modifications are intended to be included within the scope of the present disclosure. The order or sequence of any process or method steps can be varied or re-sequenced according to alternative embodiments. Other substitutions, modifications, changes, and omissions may be made in the design, operating conditions and arrangement of the exemplary embodiments without departing from the scope of the present invention, which is defined solely by the appended claims.

## Claims

1. A motor for a chiller assembly (100), the motor comprising:
a stator (204);
a rotor (206);
a shaft (208) comprising a first end (238) and a second end (240), wherein the rotor and the shaft are configured to rotate relative to the stator;
a pin (212) extending through a housing (202) of the motor, through a motor jacket (210) of the motor, and into the stator, wherein the pin is configured to inhibit displacement of the motor jacket and the stator relative to the housing;
a first radial magnetic bearing assembly (214) located proximate the first end of the shaft; a second radial magnetic bearing assembly (218) located proximate the second end of the shaft; and
a thrust magnetic bearing assembly (216) configured to support the shaft in an axial direction,
wherein the thrust magnetic bearing assembly is disposed between the stator and the second radial magnetic bearing assembly, the first radial magnetic bearing assembly and the second radial magnetic bearing assembly are configured to support the shaft in a radial direction, and the second end of the shaft is configured to couple to an impeller (230) of a centrifugal compressor (102).

2. The motor of claim 1, comprising the centrifugal compressor, wherein the centrifugal compressor is configured to utilize a low pressure refrigerant having an operating pressure of less than 400 kPa, wherein the low pressure refrigerant preferably is R1233zd.

3. The motor of claim 1 or 2, wherein the motor jacket is fabricated from aluminum, the motor jacket comprises a cylindrical shape, and the motor jacket is configured to at least partially encapsulate the stator.

4. The motor of any one of claims 1 to 3, wherein the first radial magnetic bearing assembly, the second radial magnetic bearing assembly, and the thrust magnetic bearing assembly each comprise active magnetic bearing assemblies.

5. The motor of any one of claims 1 to 4, wherein the thrust magnetic bearing assembly is located proximate the second end of the shaft.

6. The motor of claim any one of claims 1 to 5, comprising:
the motor jacket configured to at least partially encapsulate the stator; and
the housing configured to at least partially encapsulate the stator, the rotor, the shaft, the thrust magnetic bearing assembly, and the motor jacket,
wherein a first clearance between the housing and the motor jacket preferably is controlled such that deviations in a second clearance between the stator and the rotor do not exceed a threshold clearance value.

7. The motor of claim 6, wherein the stator and the motor jacket are coupled to the housing, and a clearance region extends radially between the motor jacket and the housing relative to a central axis of the shaft, and wherein the stator and the motor jacket preferably are coupled to the housing via the pin extending from the housing, through the motor jacket, and into the stator.

8. A vapor compression system, comprising:
a centrifugal compressor (102), a condenser (106), an expansion device, and an evaporator (108) connected in a closed refrigerant loop; and
the motor of any one of claims 1 to 7 configured to directly drive the centrifugal compressor.

9. The vapor compression system of claim 8, wherein the centrifugal compressor is configured to utilize a low pressure refrigerant having an operating pressure of less than 400 kPa, wherein the low pressure refrigerant preferably is R1233zd.

10. The vapor compression system of claim 8 or 9, wherein the centrifugal compressor is a single-stage compressor comprising an inlet (242), an impeller (230), a diffuser, and a scroll assembly (234).

11. The vapor compression system of claim 10, wherein the thrust magnetic bearing assembly is located between the first radial magnetic bearing assembly and the second radial magnetic bearing assembly along a central axis of the shaft, and wherein the thrust magnetic bearing assembly preferably is located proximate the impeller.

12. The vapor compression system of one of claims 8 to 11, wherein the motor is a sealed induction motor.

## Patentansprüche

1. Motor für eine Kühlerbaugruppe (100), der Motor umfassend:
einen Stator (204);
einen Rotor (206);
eine Welle (208), umfassend ein erstes Ende (238) und ein zweites Ende (240), wobei der Rotor und die Welle konfiguriert sind, um sich relativ zum Stator zu drehen;
ein Stift (212), der sich durch ein Gehäuse (202) des Motors, durch eine Motormantel (210) des Motors, und in den Stator erstreckt, wobei der Stift konfiguriert ist, um eine Verschiebung des Motormantels und des Stators relativ zum Gehäuse zu verhindern;
eine erste radiale Magnetlagerbaugruppe (214), die sich in der Nähe des ersten Endes der Welle befindet;
eine zweite radiale Magnetlagerbaugruppe (218), die in der Nähe des zweiten Endes der Welle angeordnet ist; und
eine Axialmagnetlagerbaugruppe (216), die konfiguriert ist, um die Welle in axialer Richtung abstützt,
wobei die Axialmagnetlagerbaugruppe zwischen dem Stator und der zweiten radialen Magnetlagerbaugruppe angeordnet ist, die erste radiale Magnetlagerbaugruppe und die zweite radiale Magnetlagerbaugruppe konfiguriert sind, um die Welle in radialer Richtung abstützen, und das zweite Ende der Welle konfiguriert ist, um mit einem Laufrad (230) eines Zentrifugalkompressors (102) gekoppelt zu werden.

2. Motor nach Anspruch 1, umfassend den Zentrifugalkompressor, wobei der Zentrifugalkompressor konfiguriert ist, um ein Niederdruckkältemittel mit einem Betriebsdruck von weniger als 400 kPa nutzt, wobei das Niederdruckkältemittel vorzugsweise R1233zd ist.

3. Motor nach Anspruch 1 oder 2, wobei der Motormantel aus Aluminium gefertigt ist, der Motormantel eine zylindrische Form umfasst und der Motormantel konfiguriert ist, um den Stator mindestens teilweise zu umschließen.

4. Motor nach einem der Ansprüche 1 bis 3, wobei die erste radiale Magnetlagerbaugruppe, die zweite radiale Magnetlagerbaugruppe und die Axialmagnetlagerbaugruppe jeweils aktive Magnetlagerbaugruppen umfassen.

5. Motor nach einem der Ansprüche 1 bis 4, wobei die Axialmagnetlagerbaugruppe in der Nähe des zweiten Endes der Welle angeordnet ist.

6. Motor nach einem der Ansprüche 1 bis 5, umfassend:
den Motormantel, der konfiguriert ist, um den Stator mindestens teilweise zu umschließen; und
das Gehäuse, das konfiguriert ist, um den Stator, den Rotor, die Welle, die Axialmagnetlagerbaugruppe und den Motormantel mindestens teilweise zu umschließen,
wobei ein erster Abstand zwischen dem Gehäuse und dem Motormantel vorzugsweise so geregelt wird, dass Abweichungen in einem zweiten Abstand zwischen Stator und Rotor einen Schwellenwert für den Abstand nicht überschreiten.

7. Motor nach Anspruch 6, wobei der Stator und der Motormantel mit dem Gehäuse verbunden sind und sich zwischen dem Motormantel und dem Gehäuse relativ zu einer Mittelachse der Welle ein Freiraumbereich radial erstreckt, und wobei der Stator und der Motormantel vorzugsweise über den Stift mit dem Gehäuse verbunden sind, der sich vom Gehäuse durch den Motormantel hindurch in den Stator erstreckt.

8. Dampfkompressionssystem, umfassend:
einen Zentrifugalkompressor (102), einen Kondensator (106), ein Expansionsventil und einen Verdampfer (108), die in einem geschlossenen Kältemittelkreislauf miteinander verbunden sind; und
den Motor nach einem der Ansprüche 1 bis 7, der konfiguriert ist, um den Zentrifugalkompressor direkt anzutreiben.

9. Dampfkompressionssystem nach Anspruch 8, wobei der Zentrifugalkompressor konfiguriert ist, um ein Niederdruckkältemittel mit einem Betriebsdruck von weniger als 400 kPa zu verwenden, wobei das Niederdruckkältemittel vorzugsweise R1233zd ist.

10. Dampfkompressionssystem nach Anspruch 8 oder 9, wobei der Zentrifugalkompressor ein einstufiger Kompressor ist, der einen Einlass (242), ein Laufrad (230), einen Diffusor und eine Spiralbaugruppe (234) umfasst.

11. Dampfkompressionssystem nach Anspruch 10, wobei die Axialmagnetlagerbaugruppe entlang einer Mittelachse der Welle zwischen der ersten radialen Magnetlagerbaugruppe und der zweiten radialen Magnetlagerbaugruppe angeordnet ist und wobei die Axialmagnetlagerbaugruppe vorzugsweise in der Nähe des Laufrads angeordnet ist.

12. Dampfkompressionssystem nach einem der Ansprüche 8 bis 11, wobei der Motor ein gekapselter Asynchronmotor ist.

## Revendications

1. Moteur destiné à un ensemble refroidisseur (100), le moteur comprenant :
un stator (204) ;
un rotor (206) ;
un arbre (208) comprenant une première extrémité (238) et une seconde extrémité (240), dans lequel le rotor et l'arbre sont conçus pour tourner par rapport au stator ;
une goupille (212) s'étendant à travers un logement (202) du moteur, à travers une chemise de moteur (210) du moteur, et
jusque dans le stator, dans lequel la goupille est conçue pour empêcher un déplacement de la chemise de moteur et du stator par rapport au logement ;
un premier ensemble palier magnétique radial (214) situé à proximité de la première extrémité de l'arbre ;
un second ensemble palier magnétique radial (218) situé à proximité de la seconde extrémité de l'arbre ; et
un ensemble palier magnétique de butée (216) conçus pour supporter l'arbre dans une direction axiale,
dans lequel l'ensemble palier magnétique de butée est disposé entre le stator et le second ensemble palier magnétique radial, le premier ensemble palier magnétique radial et le second ensemble palier magnétique radial sont conçus pour supporter l'arbre dans une direction radiale, et la seconde extrémité de l'arbre est conçue pour être accouplée à une roue (230) d'un compresseur centrifuge (102).

2. Moteur selon la revendication 1, comprenant le compresseur centrifuge, dans lequel le compresseur centrifuge est conçu pour utiliser un frigorigène à basse pression ayant une pression de service inférieure à 400 kPa, dans lequel le frigorigène à basse pression est de préférence du R1233zd.

3. Moteur selon la revendication 1 ou 2, dans lequel la chemise de moteur est fabriquée en aluminium, la chemise de moteur comprend une forme cylindrique, et la chemise de moteur est conçue pour encapsuler au moins partiellement le stator.

4. Moteur selon l'une quelconque des revendications 1 à 3, dans lequel le premier ensemble palier magnétique radial, le second ensemble palier magnétique radial et l'ensemble palier magnétique de butée comprennent chacun des ensembles paliers magnétiques actifs.

5. Moteur selon l'une quelconque des revendications 1 à 4, dans lequel l'ensemble palier magnétique de butée est situé à proximité de la seconde extrémité de l'arbre.

6. Moteur selon l'une quelconque des revendications 1 à 5, comprenant :
la chemise de moteur configurée pour encapsuler au moins partiellement le stator ; et
le logement conçu pour encapsuler au moins partiellement le stator, le rotor, l'arbre, l'ensemble palier magnétique de butée et la chemise de moteur,
dans lequel un premier jeu entre le logement et la chemise de moteur est de préférence régulé de telle sorte que des écarts d'un second jeu entre le stator et le rotor ne dépassent pas une valeur de jeu seuil.

7. Moteur selon la revendication 6, dans lequel le stator et la chemise de moteur sont accouplés au logement, et une région de jeu s'étend radialement entre la chemise de moteur et le logement par rapport à un axe central de l'arbre, et dans lequel le stator et la chemise de moteur sont de préférence accouplés au logement par l'intermédiaire de la goupille s'étendant depuis le logement, à travers la chemise de moteur et jusque dans le stator.

8. Système de compression de vapeur, comprenant :
un compresseur centrifuge (102), un condenseur (106),
un dispositif de détente et un évaporateur (108) reliés dans une boucle de frigorigène fermée ; et
le moteur selon l'une quelconque des revendications 1 à 7 conçu pour entraîner directement le compresseur centrifuge.

9. Système de compression de vapeur selon la revendication 8, dans lequel le compresseur centrifuge est conçu pour utiliser un frigorigène à basse pression ayant une pression de service inférieure à 400 kPa, dans lequel le frigorigène à basse pression est de préférence du R1233zd.

10. Système de compression de vapeur selon la revendication 8 ou 9, dans lequel le compresseur centrifuge est un compresseur à un seul étage comprenant une entrée (242), une roue (230), un diffuseur et un ensemble volute (234).

11. Système de compression de vapeur selon la revendication 10, dans lequel l'ensemble palier magnétique de butée est situé entre le premier ensemble palier magnétique radial et le second ensemble palier magnétique radial le long d'un axe central de l'arbre, et dans lequel l'ensemble palier magnétique de butée est de préférence situé à proximité de la roue.

12. Système de compression de vapeur selon l'une des revendications 8 à 11, dans lequel le moteur est un moteur à induction étanche.
